# EUROPÄISCHE PATENTSCHRIFT

(11) **EP 3 640 594 B1**
(45) Veröffentlichungstag und Bekanntmachung des Hinweises auf die Patenterteilung: **13.04.2022**
(21) Anmeldenummer: 19201821.6
(22) Anmeldetag: 08.10.2019
(51) Int. Cl.: G01C 21/20, G05D 1/02, G06K 19/06, H04W 4/024, H04W 4/33, H04W 4/40

(54) **SYSTEM VON KÜNSTLICHEN LANDMARKEN IN EINER UMGEBUNG ZUR VERWENDUNG FÜR EINE SENSORGESTÜTZTE LOKALISIERUNG VON MOBILEN PLATTFORMEN**
SYSTEM OF ARTIFICIAL LANDMARKS IN AN ENVIRONMENT FOR USE IN THE SENSOR-BASED LOCATION OF MOBILE PLATFORMS
SYSTÈME DE REPÈRES À TERRE ARTIFICIELS DANS UN ENVIRONNEMENT DESTINÉ À ÊTRE UTILISÉ DANS UNE LOCALISATION ASSISTÉE PAR CAPTEURS DES PLATES-FORMES MOBILES

(30) Priorität: 17.10.2018 DE 102018217734
(43) Veröffentlichungstag der Anmeldung: 22.04.2020
(73) Patentinhaber: Robert Bosch GmbH, 70442 Stuttgart (DE)
(72) Erfinder: Nienhueser, Dennis, 71263 Weil Der Stadt (DE); Schreiber, Miriam, 71263 Weil Der Stadt (DE)

(56) Entgegenhaltungen:
- EP-A1- 3 382 339
- EP-A2- 2 302 563
- EP-A2- 2 738 519
- WO-A2-2009/098319
- DE-B3-102014 002 150
- US-A1- 2011 068 164
- US-A1- 2018 088 586
- US-A1- 2018 121 775

## Beschreibung

Die vorliegende Erfindung betrifft ein *Verfahren zur sensorgestützten Lokalisierung von wenigstens einem* autonom fahrenden Fahrzeug für den Personentransport zur Verwendung in einem System von künstlichen Landmarken sowie ein Computerprogramm, ein maschinenlesbares Speichermedium und ein elektronisches Steuergerät.

### Stand der Technik

Für Fahrzeuge und allgemein für mobile Plattformen sind bereits autonome Fahrsysteme bekannt. Unter Einsatz von solchen Systemen können autonome Fahrzeuge selbstständig ohne Fahrer eine Route abfahren. Ähnlich wie Linienbusse im öffentlichen Nahverkehr können solche Plattformen auf bekannten Routen zum Einsatz kommen. Sie müssen dabei allen Anforderungen des Straßenverkehrs im Mischbetrieb gerecht werden können. Unter anderem ist dabei eine robuste, genaue und sichere Lokalisierung der mobilen Plattform entscheidend, also gewissermaßen die Kenntnis der mobilen Plattform in Bezug auf die eigene Position in der Umwelt.

Die deutsche Offenlegungsschrift DE 10 2005 058 628 A1 beschreibt ein Navigationssystem und ein Verfahren für Fahrzeuge und mobile Systeme, die sich autonom und/oder assistiert frei bewegen können, zur verlässlichen Positionsbestimmung. Dabei wird ein Navigationssystem mit mehreren unabhängigen Sensoreinrichtungen zur Bestimmung von mehreren unabhängigen Ortsdatensätzen des Fahrzeugs beschrieben. Die Auswertung erfolgt durch eine Verknüpfung der Ortsdatensätze, indem ein Vergleich von mindestens zwei der Ortsdatensätze zur Verifizierung und/oder Ermittlung eines Ergebnis-Ortsdatensatzes erfolgt.

Die EP 2 738 519 A2 betrifft das Orten eines mobilen Endgeräts unter Nutzung von optisch detektierbaren Landmarken. Bei dem mobilen Endgerät handelt es sich insbesondere um ein Smartphone.

In der US 2018/088586 A1 wird die die Navigation selbstfahrender Warentransportsysteme in einem Warenlager beschrieben. Hierzu werden an Regalen Barcodes angebracht, die mittels einer Kamera auf der Oberseite der selbstfahrenden Warentransportsysteme erkannt werden können.

Die WO 2009/098319 A2 beschreibt eine Navigationshilfe für ein Kraftfahrzeug, die eine hinter dem Kühlergrill des Fahrzeugs angeordnete Kamera nutzt, um Landmarken zu erkennen. Diese Landmarken sind an erhöhter Position angebracht und können als nebeneinander angeordnete Balken in der Art eines Barcodes ausgeführt sein.

In der DE 10 2014 002 150 B3 wird beschrieben, dass Kameras hinter der Windschutzscheibe und an den Seitenspiegeln eines Kraftfahrzeugs verwendet werden können, um Landmarken zu erkennen. Eine Landmarke kann an einer Informationstafel in erhöhter Position angebracht sein.

### Offenbarung der Erfindung

### Vorteile der Erfindung

Es wird ein Verfahren zur sensorgestützten Lokalisierung von wenigstens einem autonom fahrenden Fahrzeug für den Personentransport in einem System von künstlichen Landmarken in einer Umgebung gemäß Anspruch 1 vorgeschlagen, wobei die künstlichen Landmarken jeweils eine Code-Markierung zur eindeutigen Identifizierbarkeit der einzelnen künstlichen Landmarken (Lokalisierungs-Code) aufweisen. Gegenüber herkömmlichen Verfahren hat dieses Verfahren den Vorteil, dass es eine sehr einfache und robuste Lokalisierung erlaubt, da durch die eindeutige Identifizierbarkeit der einzelnen Landmarken, die in sensorgestützter Weise von einer mobilen Plattform detektiert werden, eine

Lokalisierung mit einfacher Auswertung in kostengünstiger und robuster Weise möglich ist. Ein wichtiger Aspekt der Erfindung ist dabei die eindeutige Identifizierbarkeit der einzelnen Landmarken durch die Verwendung von Codes.

Unter einer mobilen Plattform ist ein autonom fahrendes Fahrzeug für den Personentransport zu verstehen, beispielsweise ein autonomer Shuttle-Bus.

Zur Erkennung der künstlichen Landmarken sind die mobilen Plattformen mit einem oder mehreren Sensoren (Lokalisierungssensoren) ausgestattet. In besonders bevorzugter Weise sind die künstlichen Landmarken so ausgestaltet, dass sie durch Laserscanner der mobilen Plattformen erkannt werden können. Laserscanner werden bei mobilen Plattformen bereits im Zusammenhang mit beispielsweise Abstandsmessungen und auch für eine Lokalisierung eingesetzt. Derartige Laserscanner können mit Vorteil im Rahmen des erfindungsgemäßen Systems verwendet werden.

In einer besonders bevorzugten Ausgestaltung umfasst die Code-Markierung der künstlichen Landmarken eine Mehrzahl von vertikalen Balken, die insbesondere nebeneinander angeordnet sind. Diese Balken können aus unterschiedlichen Materialien und/oder Farben bestehen und somit vom Sensor gut unterschieden werden. Für die Ausgestaltung der künstlichen Landmarken können mit besonderem Vorteil Hell/Dunkel-Kontraste eingesetzt werden, die unterschiedliche Intensitäten in den Laserdaten erzeugen. Durch unterschiedliche Anordnung verschiedener Balken, beispielsweise dunkler und heller Balken, in unterschiedlichen Kombinationen kann eine eindeutige Identifizierbarkeit der jeweiligen Landmarke realisiert werden. Umso höher die Anzahl der Balken ist, desto mehr Variationsmöglichkeiten bei der Ausgestaltung der einzelnen Landmarke bestehen. Im Allgemeinen ergeben sich für n Balken 2ⁿ mögliche Varianten, wenn die Balken in zwei Ausgestaltungen, z.B. schwarz und weiß, verwendet werden. Die Komplexität bei der Ausgestaltung der künstlichen Landmarken kann dadurch gesteigert werden, dass die Balkenanzahl erhöht wird und/oder dass mehr als zwei verschiedene Balkenfarben verwendet werden und/oder dass neben beispielsweise vertikalen Balken auch horizontale Balken in jeder Landmarke vorgesehen sind.

Vertikale Balken sind in besonders zweckmäßiger Weise für die Lesbarkeit durch einen gewissermaßen vorbeifahrenden Lasersensor geeignet. Eine geeignete Breite und Höhe der vertikalen Balken können in Abhängigkeit von dem jeweils verwendeten Laserscanner gewählt werden. Eine geeignete Breite und eine geeignete Höhe können beispielsweise in Abhängigkeit von der gewünschten Messreichweite anhand der Spezifikationen des Laserscanners berechnet werden und hängen insbesondere von der Größe des Laserstrahls beim Verlassen des Sensors und der vertikalen und horizontalen Strahlaufweitung ab.

Weiterhin umfassen die künstlichen Landmarken wenigstens einen Kalibrierungsstreifen, der das Erkennen einer möglicherweise vorhandenen Sensor-Dekalibrierung erlaubt. Die Kalibrierungsstreifen befinden sich insbesondere oberhalb und/oder unterhalb der identifizierenden vertikalen Balken. Die Kalibrierungsstreifen können dabei analog aus beispielsweise vertikalen Balken aufgebaut sein, wobei wichtig ist, dass die für die Kalibrierungsstreifen verwendeten Codes andere sind als für die Codes der Balken im Mittelteil, die für die eigentliche Identifizierbarkeit der jeweiligen Landmarke (Lokalisierungs-Codes) eingesetzt werden. Somit können die Kalibrierungsstreifen eindeutig von den Lokalisierungs-Codes unterschieden werden. Die Kalibrierungsstreifen können auf allen künstlichen Landmarken des Systems identisch sein, um die Landmarken möglichst einfach zu gestalten. Das Erkennen einer möglichen Dekalibrierung des Sensors beruht darauf, dass der Sensor im Normalfall (das heißt bei richtiger Kalibrierung bzw. Einstellung) nur den mittleren Bereich der Landmarke mit dem Lokalisierungs-Code erfasst. Nur bei einer Dekalibrierung, also wenn das Sichtfeld des Sensors zu hoch oder zu niedrig liegt, erfasst der Sensor einen Kalibrierungsstreifen. In diesem Fall kann also darauf geschlossen werden, dass eine Dekalibrierung des Sensors der mobilen Plattform vorliegt. Wenn der Sensor derart stark dekalibriert bzw. falsch eingestellt ist, dass weder der Lokalisierungs-Code noch ein Kalibrierungsstreifen detektiert wird, kann dieser Fehlerfall ebenfalls erkannt werden.

Weiterhin können die künstlichen Landmarken mit wenigstens einem QR-Code ausgestattet sein, der eine zusätzliche eindeutige Identifizierbarkeit der Landmarken mit besonderer Sicherheit erlaubt und/oder gegebenenfalls unterstützend herangezogen werden kann. So kann es vorgesehen sein, dass die künstlichen Landmarken neben der relativ einfachen Codierung mit vertikalen und/oder horizontalen Balken (eindimensionaler Code) zusätzlich einen QR-Code als zweidimensionalen Code aufweist, der als weitere Sicherheitsstufe eine zusätzliche eindeutige Identifizierbarkeit der künstlichen Landmarken erlaubt. Es können beispielsweise alle künstlichen Landmarken des Systems oder nur einige der künstlichen Landmarken im System mit einem QR-Code ausgestattet sein.

Unter Heranziehung der QR-Codes kann beispielsweise in regelmäßigen Abständen eine Überprüfung der Lokalisierung auf der Basis der vertikalen und/oder horizontalen Balken durch Abgleich mit einer Identifizierung mittels des QR-Codes erfolgen.

Das vorliegend beschriebene Verfahren hat den besonderen Vorteil, dass die künstlichen Landmarken relativ einfach ausgestaltet sein können und insbesondere frei von elektronischen Bauteilen sind. Zur Verbesserung der Lesbarkeit durch die Sensoren der mobilen Plattformen können die Code-Markierungen der Landmarken mit Vorteil auf einer konvex gekrümmten Oberfläche der künstlichen Landmarken angebracht sein, so dass durch diese etwa halbrunde Ausführung eine Erkennbarkeit von der Seite verbessert wird.

In einer besonders bevorzugten Ausgestaltung der künstlichen Landmarken befinden sich die einzelnen Bestandteile der Code-Markierung auf unterschiedlichen Höhen in Bezug auf die Oberfläche der künstlichen Landmarke. Hierbei sind unter der Code-Markierung neben den Markierungen für die Identifizierbarkeit, also beispielsweise vertikale Balken, auch die anderen, gegebenenfalls vorgesehenen zusätzlichen Bestandteile der Landmarke zu verstehen, wie beispielsweise eine Zielmarke, Kalibrierungsstreifen und/oder QR-Codes. Hierdurch wird gewissermaßen eine dreidimensionale Gestaltung der Landmarke realisiert, wobei einzelne Bestandteile der Codierung (z.B. Balken) unterschiedliche Distanzen zu dem Sensor der mobilen Plattform aufweisen. Dies verstärkt die Unterscheidbarkeit und Lesbarkeit und damit die Identifizierbarkeit der Landmarken. Weiterhin kann diese Ausgestaltung genutzt werden, um weitere Varianten bei der Codierung zu erzeugen.

In einer besonders vorteilhaften Ausgestaltung des Systems werden die künstlichen Landmarken an eine vorhandene Verkehrsinfrastruktur angebracht. Beispielsweise können die Landmarken an Laternenpfählen oder ähnlichen Strukturen angebracht werden. Hierbei handelt es sich um eine besonders kostengünstige Lösung, da auf zusätzliche Infrastrukturmaßnahmen verzichtet werden kann. Oftmals sind derartige vorhandene Infrastrukturen bereits in regelmäßigen Abständen an einem Fahrweg angebracht, so dass sich diese Infrastrukturen in besonderer Weise für das erfindungsgemäße System eignen.

Die künstlichen Landmarken werden in einer Höhe angebracht, die sich in etwa auf der Höhe oder oberhalb der Höhe des Dachs der mobilen Plattformen befinden. Die Sensoren, beispielsweise die Laserscanner auf den mobilen Plattformen, werden auf dem Dach der mobilen Plattformen angebracht, so dass eine gute Sicht auf die künstlichen Landmarken gewährleistet ist. Bei der Verwendung dieses Systems für Shuttle-Busse können die Landmarken beispielsweise in einer Höhe ab etwa 2 m, beispielsweise in einer Höhe von ca. 2,5 m, angebracht werden und können so sehr gut von einem Laserscanner, der auf dem Dach eines Shuttle-Busses angebracht ist, erkannt werden. Diese Anbringung der Landmarken in einer gewissen Höhe hat den besonderen Vorteil, dass die Landmarken sich außerhalb der gewöhnlichen Reichweite von Menschen befinden und so vor Beschädigungen und Manipulationen geschützt sind. Weiterhin wird durch die Anbringung in dieser Höhe gewährleistet, dass Sichtbehinderungen durch die Landmarken für andere Verkehrsteilnehmer und durch andere Verkehrsteilnehmer vermieden werden.

Insgesamt erlaubt das System der künstlichen Landmarken mit dem einfachen Aufbau der Landmarken und der Vermeidung von elektronischen Bauteilen eine besonders kostengünstige Lösung für die Lokalisierung von autonom fahrenden, mobilen Plattformen. Durch eine Integration von Zielmarken für ein Georeferenzierungssystem in die Landmarken ist dabei eine hochgenaue Vermessung möglich.

Die Erfindung dient zur Lokalisierung von mobilen Plattformen, die in dem beschriebenen System von künstlichen Landmarken verwendet werden. Bei diesen mobilen Plattformen befinden sich ein oder mehrere Sensoren, die für die sensorgestützte Lokalisierung eingesetzt werden, auf dem Dach, der mobilen Plattform. Diese Ausgestaltung der mobilen Plattform erlaubt gewissermaßen eine Rundumsicht der Sensoren, so dass die im Umfeld der mobilen Plattform befindlichen künstlichen Landmarken sehr gut erkannt werden können. In einer besonders bevorzugten Ausgestaltung handelt es sich um 360°-Sensoren. Besonders bevorzugt sind Laserscanner und ganz besonders bevorzugt sind 360°-Laserscanner. Die Position der Sensoren auf dem Dach der mobilen Plattform hat den weiteren Vorteil, dass diese Position oberhalb der meisten anderen Verkehrsteilnehmer liegt und damit eine Sichtverdeckung durch andere Verkehrsteilnehmer auf die künstlichen Landmarken weitestgehend vermieden wird. Weiterhin hat die damit zusammenhängende Anbringung der künstlichen Landmarken in einer gewissen Höhe den bereits beschriebenen Vorteil, dass Beschädigungen und Manipulationen durch Menschen vorgebeugt werden.

Die Erfindung umfasst ein Verfahren zum Betreiben von mobilen Plattformen in einer Umgebung, wobei eine sensorgestützte Lokalisierung der mobilen Plattformen innerhalb der Umgebung erfolgt. Bei diesem Verfahren wird das beschriebene System von künstlichen Landmarken in der Umgebung verwendet. Die künstlichen Landmarken sind dabei derart in der Umgebung angebracht, dass sich während des Betriebs der mobilen Plattform immer wenigstens eine künstliche Landmarke im Sichtfeld des oder der Sensoren der mobilen Plattform befindet. Dieses Verfahren kann insbesondere für autonom fahrende Plattformen, wie beispielsweise Shuttle-Busse, eingesetzt werden, wobei entlang der geplanten Route beziehungsweise der möglichen Routen die künstlichen Landmarken angebracht sind. Für die Anbringung der Landmarken wird vorzugsweise vorhandene Infrastruktur genutzt. So können beispielsweise Straßenlaternen als Träger für die künstlichen Landmarken verwendet werden.

Während des Betriebs der mobilen Plattformen werden die künstlichen Landmarken insbesondere sowohl zur initialen als auch zur fortlaufenden Lokalisierung genutzt. Bei der fortlaufenden Lokalisierung kann mit Vorteil die ermittelte Position plausibilisiert werden, indem die Lokalisierung auf der Basis der letzten detektierten Landmarke mit der Lokalisierung auf der Basis der aktuell gesichteten Landmarke verglichen wird, wodurch eine Reduktion der Rechenzeit erreicht werden kann.

Während des Betriebs der mobilen Plattformen wird laufend oder in regelmäßigen Abständen oder beispielsweise auch nur zu Beginn und/oder am Ende der Fahrt überprüft, ob gegebenenfalls eine Sensor-Dekalibrierung vorliegt. Diese Überprüfung erfolgt anhand der für diese Zwecke vorgesehenen Kalibrierungsstreifen auf den künstlichen Landmarken, die weiter oben bereits beschrieben wurden.

Die Erfindung umfasst weiterhin ein Computerprogramm, das zur Durchführung des beschriebenen Verfahrens eingerichtet ist. Weiterhin umfasst die Erfindung ein maschinenlesbares Speichermedium, auf welchem ein solches Computerprogramm gespeichert ist, sowie ein elektronisches Steuergerät, das zur Durchführung dieses Verfahrens eingerichtet ist. Bei diesem Steuergerät handelt es sich insbesondere um ein Steuergerät für die beschriebenen mobilen Plattformen. Hierbei können entsprechende Steuergeräte beispielsweise lokal auf der jeweiligen Plattform vorhanden sein. Alternativ sind auch zentrale Lösungen möglich, bei denen ein zentrales Steuergerät über entsprechende Kommunikationsmittel mit den einzelnen Plattformen interagieren und die Steuerung der einzelnen Plattformen unter Einbezug der sensorgestützten Lokalisierung auf der Basis der beschriebenen künstlichen Landmarken vornehmen kann.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

In den Zeichnungen zeigen:
- Fig. 1: schematische Darstellung eines Wegesystems mit Anbringung von künstlichen Landmarken und Andeutung einer vorgesehenen Route einer mobilen Plattform;
- Fig. 2: Darstellung der Anbringung von künstlichen Landmarken an vorhandener Infrastruktur im Zusammenspiel mit einer mobilen Plattform;
- Fig. 3: mögliche Varianten einer Code-Markierung für künstliche Landmarken des beschriebenen Systems und
- Fig. 4: beispielhafte Ausgestaltung einer künstlichen Landmarke mit Kalibrierungsstreifen.

### Beschreibung von Ausführungsbeispielen

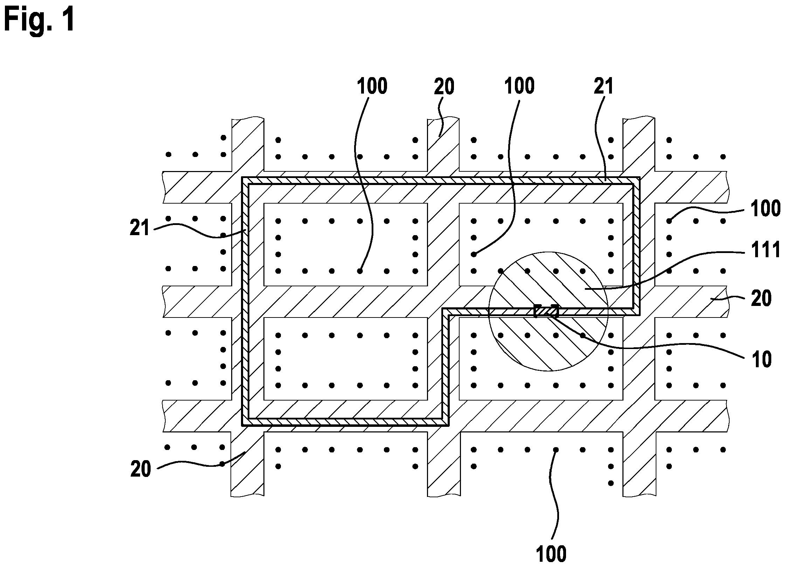

**Fig. 1** illustriert in schematischer Weise die Anbringung von künstlichen Landmarken in einem Wegenetz, das zum Befahren durch das autonom fahrende Fahrzeug 10 vorgesehen ist. Entlang der Wege 20 des Wegenetzes befinden sich in regelmäßigen Abständen Landmarken 100. Die Landmarken 100 sind beispielsweise an Straßenlaternen oder anderen, vorteilhafterweise bereits vorhandenen Infrastrukturen angebracht. Prinzipiell ist es auch möglich, für die Anbringung der Landmarken 100 entsprechende Masten oder Ähnliches extra aufzustellen oder anzubringen. Das Fahrzeug 10 ist insbesondere als autonomer Shuttle-Bus ausgestaltet, der entlang der Route 21 fährt. Der Kreis 111, der das Fahrzeug 10 umgibt, illustriert das Sichtfeld eines Sensors des Fahrzeugs 10, der die Landmarken 100 in diesem Sichtfeld 111 detektieren kann. Der Kernpunkt dieses Systems mit den Landmarken 100 liegt darin, dass die einzelnen Landmarken 100 eindeutig identifizierbar sind, wobei hierfür jeweils eine Code-Markierung an den Landmarken 100 vorgesehen ist. Durch die Erkennung der einzelnen Landmarken 100 im Sichtfeld 111 des Fahrzeugs 10 und einer entsprechenden Auswertung der Codierung der künstlichen Landmarken 100 kann eine initiale und fortlaufende Lokalisierung des Fahrzeugs 10 vorgenommen werden. Dieses System gewährleistet dabei eine genaue und sichere Lokalisierung innerhalb der Reichweite der Sensoren. Diese Lokalisierung ist robust und erlaubt zudem eine globale Lokalisierung in einem georeferenzierten Koordinatensystem durch entsprechende Ausgestaltung der Sensoren 100. Die Reichweite und das Sichtfeld der Sensoren sollten dabei so ausgestaltet sein, dass immer mindestens eine Landmarke 100 innerhalb der Sensorreichweite liegt.

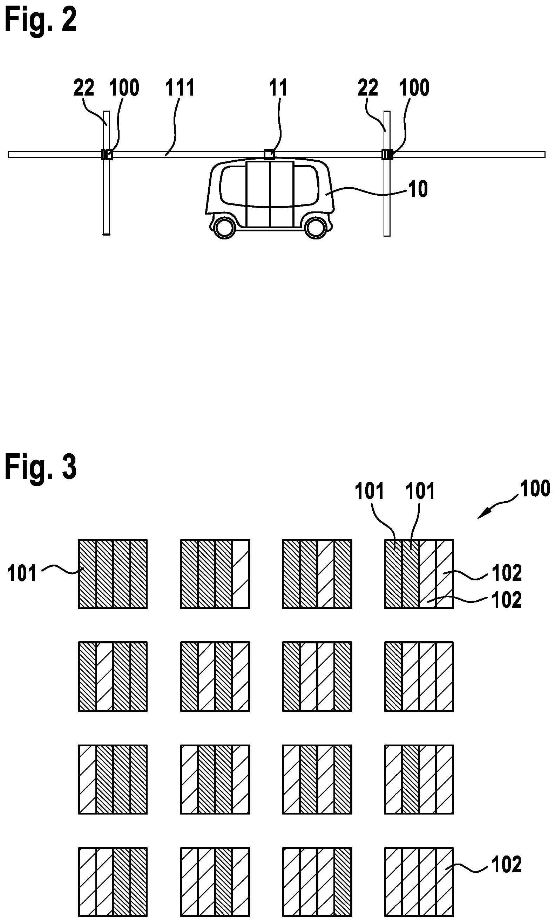

**Fig. 2** zeigt eine besonders bevorzugte Ausgestaltung des Systems, wobei ein Sensor 11, insbesondere ein Lasersensor, auf dem Dach des Fahrzeugs 10 (z. B. Shuttle-Bus) angebracht ist. In korrespondierender Weise sind die Landmarken 100 in einer entsprechenden Höhe, beispielsweise in einer Höhe von etwa 2,5 m, auf in regelmäßigen Abständen vorgesehenen Infrastrukturelementen 22, beispielsweise Laternenmasten, angebracht. Der Streifen 111 deutet das Sichtfeld des Sensors 11 an. Durch diese erhöhte Anbringung der Landmarken 100 befinden sich die Landmarken 100 außerhalb der Reichweite von Menschen und sind damit vor Beschädigungen oder Manipulationen geschützt. Weiterhin wird durch die erhöhte Anbringung der künstlichen Landmarken 100 und des Sensors 11 vermieden, dass andere Verkehrsteilnehmer das Sichtfeld des Sensors 11 stören.

Bei dem Betrieb der mobilen Plattformen, insbesondere bei autonom fahrenden Plattformen in einem System mit den künstlichen Landmarken laufen im Allgemeinen zwei Phasen ab. Zunächst befindet sich das Fahrzeug 10, beispielsweise ein autonomer Shuttle-Bus, auf einem beliebigen Punkt der Route 21, wobei sich das Fahrzeug 10 in Sichtweite mindestens einer Landmarke 100 befindet. Wenn das System gestartet wird, analysiert ein Detektionsalgorithmus die Sensordaten des Sensors 11, der wenigstens eine Landmarke 100 sichtet. Der Detektionsalgorithmus berücksichtigt dabei alle sichtbaren Landmarken 100 und berechnet daraus die initiale Position. Nach dem Losfahren des Fahrzeugs 10 werden fortlaufend die Sensordaten analysiert und die Position des Fahrzeugs 10 aktualisiert. Hierbei werden vorteilhafterweise jeweils die vorherigen Positionen der Landmarken 100, die passiert wurden, zur Plausibilisierung der aktuellen Position und damit zur Reduktion der Rechenzeit genutzt.

**Fig. 3** zeigt eine konkrete Ausgestaltungsform der Code-Markierung der künstlichen Landmarken 100, wobei vertikale Balken in unterschiedlicher Färbung nebeneinander angeordnet sind und durch die Abfolge von dunklen Balken 101 und hellen Balken 102 eine eindeutige Identifizierbarkeit der Landmarken 100 realisiert wird. Die hierdurch bewirkten Hell/Dunkel-Kontraste sind insbesondere für eine Erkennung durch Laserscanner geeignet, da sie unterschiedliche Intensitäten in den Laserdaten erzeugen. Es sind jedoch auch andere Ausgestaltungen zur Unterscheidbarkeit der einzelnen Balken möglich. Beispielsweise können auch verschiedene Materialien für verschiedene Balken genutzt werden, die von einem entsprechenden Sensor gut unterschieden werden können. Auf diese Weise werden die künstlichen Landmarken 100 so gestaltet, dass sie einerseits als künstliche Landmarken erkennbar sind und andererseits auch voneinander unterscheidbar sind. Bei der hier illustrierten Ausgestaltung mit vier vertikalen, nebeneinander angeordneten Balken sind beispielsweise 16 Varianten möglich, so dass 16 verschiedene Landmarken in dem System verwendet werden können. Durch Erhöhung der Anzahl der Balken und/oder durch Verwendung von mehr als zwei unterschiedlichen Ausgestaltungen der jeweiligen Balken sind deutlich mehr Variationsmöglichkeiten realisierbar, so dass eine Vielzahl von unterschiedlich codierten künstlichen Landmarken erzeugt werden kann, die in dem beschriebenen System eingesetzt werden können.

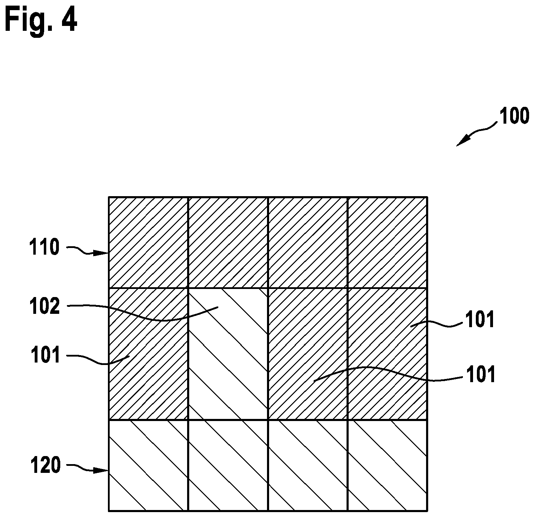

**Fig. 4** illustriert im Vergleich mit Fig. 3 eine etwas komplexere Ausgestaltung einer künstlichen Landmarke 100, wobei neben einem zentralen Feld für die Anordnung von vertikalen Balken 101 und 102, mit denen die Identifizierbarkeit gemäß dem anhand von Fig. 3 beschriebenen Prinzip realisiert wird, oberhalb und unterhalb jeweils ein Kalibrierungsstreifen 110, 120 vorgesehen ist. Mithilfe dieser Kalibrierungsstreifen 110, 120 kann eine Überprüfbarkeit einer gegebenenfalls vorliegenden Dekalibrierung der Lokalisierungssensoren ermöglicht werden. Derartige Kalibrierungsstreifen 110, 120 können bei allen künstlichen Landmarken des Systems oder nur bei einigen ausgewählten Landmarken vorhanden sein. Beispielsweise können die Landmarken mit Kalibrierungsstreifen 110, 120 an kritischen Punkten des Wegesystems angeordnet sein, um an diesen Punkten die Kalibrierung der Sensoren zu überprüfen, um auf diese Weise einen Fehlbetrieb auszuschließen.

## Patentansprüche

1. Verfahren zur sensorgestützten Lokalisierung von wenigstens einem autonom fahrenden Fahrzeug (10) für den Personentransport unter Verwendung eines Systems von künstlichen Landmarken (100) in einer Umgebung (20), wobei die künstlichen Landmarken (100) jeweils eine Code-Markierung zur eindeutigen Identifizierbarkeit aufweisen und in einer Höhe angebracht sind, die sich auf der Höhe oder oberhalb der Höhe des Dachs des Fahrzeugs (10) befindet, wobei sich wenigstens ein Sensor (11) für die sensorgestützte Lokalisierung auf dem Dach des Fahrzeugs (10) befindet, **dadurch gekennzeichnet, dass** während des Betriebs des Fahrzeugs (10) unter Einbeziehung der künstlichen Landmarken (100) überprüft wird, ob eine Sensor-Dekalibrierung des wenigstens einen Sensors (11) vorliegt, indem überprüft wird, ob der wenigstens eine Sensor (11) einen Kalibrierungsstreifen (110, 120) der künstlichen Landmarken (100) erfasst.

2. Verfahren nach Anspruch 1, **dadurch gekennzeichnet, dass** die Code-Markierung eine Mehrzahl von vertikalen, nebeneinander angeordneten Balken (101, 102) umfasst.

3. Verfahren nach Anspruch 2, **dadurch gekennzeichnet, dass** die Balken (101, 102) aus unterschiedlichen Materialien und/oder Farben bestehen.

4. Verfahren nach Anspruch 2 oder 3, **dadurch gekennzeichnet, dass** wenigstens ein Kalibrierungsstreifen (110, 120) oberhalb und/oder unterhalb der Balken (101, 102) angeordnet ist.

5. Verfahren nach einem der vorhergehenden Ansprüche, **dadurch gekennzeichnet, dass** die künstlichen Landmarken (100) wenigstens einen QR-Code aufweisen.

6. Verfahren nach einem der vorhergehenden Ansprüche, **dadurch gekennzeichnet, dass** die Code-Markierung auf einer konvex gekrümmten Oberfläche der künstlichen Landmarken (100) angebracht ist.

7. Verfahren nach einem der vorhergehenden Ansprüche, **dadurch gekennzeichnet, dass** einzelne Bestandteile der Code-Markierung auf unterschiedlichen Höhen in Bezug auf die Oberfläche der künstlichen Landmarke (100) angebracht sind.

8. Computerprogramm, welches eingerichtet ist, die Schritte eines Verfahrens gemäß einem der Ansprüche 1 bis 7 durchzuführen.

9. Maschinenlesbares Speichermedium, auf welchem ein Computerprogramm nach Anspruch 8 gespeichert ist.

10. Elektronisches Steuergerät, das eingerichtet ist, die Schritte eines Verfahrens gemäß einem der Ansprüche 1 bis 7 durchzuführen.

## Claims

1. Method for the sensor-based localization of at least one autonomously driving vehicle (10) for passenger transportation using a system of artificial landmarks (100) in an environment (20), wherein the artificial landmarks (100) each have a code marking for unique identifiability and are installed at a height which is at the height or above the height of the roof of the vehicle (10), wherein at least one sensor (11) for the sensor-based localization is situated on the roof of the vehicle (10), **characterized in that**, during operation of the vehicle (10), a check is carried out, with the inclusion of the artificial landmarks (100), in order to determine whether there is sensor decalibration of the at least one sensor (11) by checking whether the at least one sensor (11) senses a calibration strip (110, 120) of the artificial landmarks (100).

2. Method according to Claim 1, **characterized in that** the code marking comprises a plurality of vertical bars (101, 102) arranged beside one another.

3. Method according to Claim 2, **characterized in that** the bars (101, 102) consist of different materials and/or colours.

4. Method according to Claim 2 or 3, **characterized in that** at least one calibration strip (110, 120) is arranged above and/or below the bars (101, 102).

5. Method according to one of the preceding claims, **characterized in that** the artificial landmarks (100) have at least one QR code.

6. Method according to one of the preceding claims, **characterized in that** the code marking is applied to a convexly curved surface of the artificial landmarks (100) .

7. Method according to one of the preceding claims, **characterized in that** individual parts of the code marking are applied at different heights with respect to the surface of the artificial landmark (100).

8. Computer program which is configured to carry out the steps of a method according to one of Claims 1 to 7.

9. Machine-readable storage medium on which a computer program according to Claim 8 is stored.

10. Electronic control unit which is configured to carry out the steps of a method according to one of Claims 1 to 7.

## Revendications

1. Procédé de localisation, assistée par capteur, d'au moins un véhicule à conduite autonome (10), destiné au transport de passagers, à l'aide d'un système de repères artificiels (100) dans un environnement (20), les repères artificiels (100) comportant chacun un marquage codé destiné à une identification claire et étant fixés à une hauteur qui est égale ou supérieure à la hauteur du toit du véhicule (10), au moins un capteur (11) destiné à la localisation assistée par capteurs étant situé sur le toit du véhicule (10), **caractérisé en ce que**, pendant le fonctionnement du véhicule (10) y compris celui des repères artificiels (100), l'on vérifie si l'au moins un capteur (11) est désétalonné en vérifiant si l'au moins un capteur (11) détecte une bande d'étalonnage (110, 120) des repères artificiels (100).

2. Procédé selon la revendication 1, **caractérisé en ce que** le marquage codé comprend une pluralité de barres verticales (101, 102) disposées les unes à côté des autres.

3. Procédé selon la revendication 2, **caractérisé en ce que** les barres (101, 102) comprennent des matières et/ou des couleurs différentes.

4. Procédé selon la revendication 2 ou 3, **caractérisé en ce qu'**au moins une bande d'étalonnage (110, 120) est disposée au-dessus et/ou au-dessous des barres (101, 102) .

5. Procédé selon l'une des revendications précédentes, **caractérisé en ce que** les repères artificiels (100) comportent au moins un code QR.

6. Procédé selon l'une des revendications précédentes, **caractérisé en ce que** le marquage codé est fixé sur une surface incurvée convexe des repères artificiels (100).

7. Procédé selon l'une des revendications précédentes, **caractérisé en ce que** des composants individuels du marquage codé sont fixés à différentes hauteurs par rapport à la surface du repère artificiel (100).

8. Logiciel conçu pour mettre en œuvre les étapes d'un procédé selon l'une des revendications 1 à 7.

9. Support de stockage lisible par machine sur lequel est stocké un logiciel selon la revendication 8.

10. Unité de commande électronique conçue pour mettre en œuvre les étapes d'un procédé selon l'une des revendications 1 à 7.
